# DEMANDE DE BREVET EUROPEEN

(11) **EP 2 735 483 A1**
(43) Date de publication de la demande: **28.05.2014**
(21) Numéro de dépôt: 13192923.4
(22) Date de dépôt: 14.11.2013
(51) Int. Cl.: B60T 13/74

(54) **Servofrein électro-hydraulique à boîtier en matière plastique moulé en deux parties**

(30) Priorité: 21.11.2012 FR 1261072
(71) Demandeur: ROBERT BOSCH GMBH, 70442 Stuttgart (DE)
(72) Inventeur: Winkler, Roman, 92600 Asnieres sur Seine (FR); Richard, Philippe, 77500 CHELLES (FR); Gaffe, Francois, 44420 La Turballe (FR); Cagnac, Bastien, 60660 Cramoisy (FR)

(57) **Abrégé**

Servofrein électro-hydraulique (1) ayant un boîtier (4) formé de deux parties (4AR, 4AV) logeant le mécanisme de transmission à partir du moteur électrique logé dans un compartiment (130), le moteur étant porté par une platine (6) fixée à ce compartiment (130) par des tirants (61). Le maître-cylindre (3) est fixé à la partie (4AV) du boîtier par l'intermédiaire de tirants (8) passant dans des cheminées (115V, 115R) des deux parties du boîtier (4) pour être fixé à une interface (7) en tôle d'acier, portée par l'arrière de la partie (4AR) du boîtier, du côté de la tige de commande (2) venant de la pédale de frein. Le boîtier est ainsi enserré entre l'embase (31) du maître-cylindre (3) et la platine (6), elle-même appuyée contre un appui (41) de la partie (4AR). Les tirants (8) sont dans une position diamétralement opposée par rapport à celle de l'axe de manoeuvre (XX) de la tige de commande et du piston d'actionneur ainsi que du maître-cylindre (3).

## Description

### Domaine de l'invention

La présente invention se rapporte à un servofrein électro-hydraulique de circuit de frein de véhicule relié à un maître-cylindre tandem et commandé par la pédale de frein, ce servofrein à moteur électrique commandant, par un mécanisme de transmission à crémaillère, un piston d'actionneur agissant sur le piston primaire du maître-cylindre, le poussoir, le piston d'actionneur et le maître-cylindre étant alignés sur un axe de manoeuvre, et le servofrein étant muni de broches pour être fixé avec le maître-cylindre au tablier du véhicule.

### Etat de la technique

De tels servofreins électro-hydrauliques sont connus. Ils ont un boîtier de servofrein réalisé en aluminium injecté. Cette solution, quoiqu'intéressante, présente un certain nombre d'inconvénients tels que l'usinage nécessaire après la coulée du boîtier en aluminium, le poids du boîtier nécessite un nombre important de pièces.

### But de l'invention

La présente invention a pour but de simplifier la fabrication d'un servofrein électro-hydraulique et en particulier de son boîtier et de son assemblage tout en assurant les conditions de fonctionnement imposées à un tel servofrein pour la transmission des efforts de compression et de traction.

### Exposé et avantages de l'invention

A cet effet, l'invention a pour objet un servofrein électro-hydraulique du type défini ci-dessus caractérisé en ce qu'il comporte
A. un boîtier en matière plastique en deux parties assemblées sur le mécanisme de transmission et le piston d'actionneur, et logeant le moteur électrique,
B. une interface en acier pour l'assemblage au tablier du véhicule,
C. un maître-cylindre tandem avec une embase d'assemblage,
D. au moins deux tirants traversant le boîtier parallèlement à l'axe de manoeuvre de part et d'autre de celui-ci voir dans deux positions diamétralement opposées par rapport à l'axe XX, les tirants s'appuyant par une extrémité sur l'embase du maître-cylindre et par l'autre, sur l'interface pour enserrer le boîtier entre l'embase et l'interface.

Le servofrein selon l'invention a de multiples avantages car le boîtier réalisé en matière plastique simplifie considérablement la fabrication puisque le boîtier étant moulé, on supprime l'usinage après le moulage, la finition correspondant à la forme définitive du boîtier. Le boîtier en matière plastique allège l'ensemble du servofrein. Le boîtier est en deux parties, facilite l'assemblage puisque le mécanisme de transmission peut être pratiquement installé complètement dans l'une des parties, par exemple la partie arrière du boîtier, et la partie avant comporte seulement le moteur électrique. Par l'assemblage, on réunit les deux parties, et les compartiments recevant les différents organes du mécanisme de transmission se complètent par leur jonction dans le plan d'assemblage.

Comme les tirants transmettent les efforts du servofrein à la platine, le boîtier ne subit pas d'efforts de traction mais uniquement les efforts de compression qui se transmettent à la plaque formant l'interface.

On réduit par cette structure, le nombre de pièces à assembler.

Les tirants placés de chaque côté dans une position symétrique par rapport au piston d'actionneur et surtout aux crémaillères du piston d'actionneur, tous les efforts exercés par le piston d'actionneur se situent pratiquement dans le plan passant par les deux tirants.

Suivant une autre caractéristique avantageuse, les tirants traversent l'interface et forment des broches de fixation du servofrein au tablier du véhicule.

Suivant une autre caractéristique, le boîtier en matière plastique est composé des deux parties assemblées suivant un plan d'assemblage,
- une partie avant ayant
   * sur le côté avant, un compartiment cylindrique ouvert, logeant le moteur électrique avec une sortie dans le fond pour l'axe du moteur,
   * sur le côté arrière, des compartiments formant des parties de logement pour les organes du mécanisme de transmission et les paliers des axes des pignons droits, de part et d'autre du pignon droit respectif coopérant avec la crémaillère du piston d'actionneur,
- une partie arrière ayant :
   * sur le côté avant, un appui de l'interface,
   * sur le côté arrière, des compartiments homologues et complémentaires à ceux de la partie avant, pour constituer par l'assemblage des deux parties, des logements recevant les organes du mécanisme,
- les compartiments étant délimités par des cloisons perpendiculaires au plan d'assemblage passant par les axes géométriques des axes du mécanisme de transmission, le plan d'assemblage passant par les axes des pignons droits.

Cette structure des parties avant et arrière est rigidifiée par les différentes cloisons formant chacune des parties et notamment comme le plan d'assemblage passe par les axes des pignons droits, cela simplifie de manière très importante le montage du servofrein puisque l'une des parties avant ou arrière, et de préférence la partie avant, reçoit les composants du mécanisme de transmission tels que les roues à vis avec leur axe portant les pignons droits, alors que l'autre partie du boîtier reçoit le moteur électrique avec son axe et la vis qui, par assemblage, viendra s'introduire dans l'intervalle des deux roues à vis.

Dans ces conditions, l'assemblage final se limite pratiquement à l'assemblage de trois parties, les deux parties constituant le boîtier muni des composants respectifs mis en place au préalable, et du maître-cylindre tandem pour être ainsi assemblé par les tirants.

Suivant une autre caractéristique, le boîtier comporte des cheminées longitudinales pour le passage des tirants. Ces cheminées qui se complètent, pour la partie avant et la partie arrière, constituent des entretoises cylindriques, assurant au moins en partie la tenue à la compression du boîtier, d'autant plus que ces cheminées sont de préférence de section circulaire et entourent chacune un tirant.

Suivant une autre caractéristique avantageuse, le fond du compartiment cylindrique comporte une cavité pour le palier de sortie de l'axe du moteur électrique. Cette forme du fond permet d'assurer le bon appui de l'axe du moteur d'autant plus que le palier de sortie de l'axe se trouve, du fait de la structure d'ensemble, à proximité des deux roues à vis et de l'intervalle entre ces deux roues dans lesquelles arrive la vis de transmission portée par l'axe et engrenant avec les roues à vis.

Suivant une autre caractéristique avantageuse, la partie arrière comporte, côté arrière, un passage pour le guidage du piston d'actionneur.

Suivant une autre caractéristique avantageuse, le compartiment cylindrique est bordé par des cheminées d'assemblage parallèle à l'axe, pour les tirants de fixation de la platine (portant le moteur électrique.

Ce montage a l'avantage de permettre l'assemblage séparé, et de préférence préalablement, du moteur du servofrein Toutefois, il est également possible d'inverser le montage sans le compliquer. On peut assembler les deux parties du boîtier et le servofrein de sorte que l'ensemble est plus facile et plus léger, puis une fois que les trois parties, à savoir les deux parties du boîtier et le servofrein, sont assemblées, on peut mettre en place le moteur et le monter par les tirants fixés dans les cheminées extérieures au compartiment recevant le moteur.

Ce montage est possible puisque la vis d'entraînement portée par l'axe de sortie du moteur se glisse naturellement dans l'intervalle entre les deux roues à vis déjà installées. Pour ce montage, il suffit par exemple de faire tourner le rotor du moteur de façon que son axe tourne et que la vis se loge en se vissant dans l'intervalle des deux roues à vis avec lesquelles elle engrène.

Ce processus est d'autant plus faisable que le moteur électrique est porté par une platine munie d'un palier pour l'axe du moteur fermant le compartiment en étant fixée aux cheminées par des tirants.

Suivant une autre caractéristique, les parties arrière et avant comportent sur leur face tournée l'une vers l'autre, des cloisons se rejoignant en appui, chant contre chant :
- un dessus et un dessous,
- une cloison supérieure délimitant le compartiment supérieur avec le dessus,
- une cloison intermédiaire sous la cloison supérieure, délimitant deux compartiments intermédiaires,
- une cloison basse sous la cloison intermédiaire et une cloison inférieure au-dessus du dessous pour délimiter le compartiment du piston d'actionneur,
- la cloison inférieure formant deux compartiments inférieurs.

Suivant une autre caractéristique, le mécanisme de transmission, symétrique par rapport à un plan passant par l'axe comprend :
- une vis à l'extrémité de l'axe du moteur, dans le plan de symétrie,
- deux roues à vis identiques dans des positions symétriques, portant chacune un axe,
- un pignon droit solidaire de l'un des axes,
- un palier intermédiaire entre la roue à vis et le pignon droit sur chaque axe,
- un palier inférieur au-delà du pignon droit sur l'axe,
- les roues à vis étant logées dans le compartiment supérieur de part et d'autre de la vis en engrenant avec celle-ci,
- les paliers étant logés respectivement dans le compartiment intermédiaire et le compartiment inférieur,
- les pignons droits étant logés entre la cloison basse et la cloison inférieure en regard respectivement d'une crémaillère du piston d'actionneur.

Ainsi globalement, le servofrein selon l'invention avec le maître-cylindre constitue un ensemble, simple à fabriquer et à assembler et résistant parfaitement aux efforts que le servofrein doit transmettre au piston primaire du maître-cylindre.

### Dessins

La présente invention sera décrite ci-après de manière plus détaillée à l'aide d'un exemple de réalisation d'un servofrein électro-hydraulique selon l'invention représenté dans les dessins annexés dans lesquels :
- la figure 1 est une vue isométrique du servofrein assemblé, muni du maître-cylindre tandem, prêt à être installé sur le tablier du véhicule,
- la figure 2 est une vue éclatée de l'arrière du boîtier de servofrein selon l'invention,
- la figure 3 est une vue éclatée de l'avant du boîtier du servofrein,
- la figure 4 est une vue en coupe transversale du servofrein de la figure 1 pour un plan passant par les axes des roues à vis.

### Description de modes de réalisation de l'invention

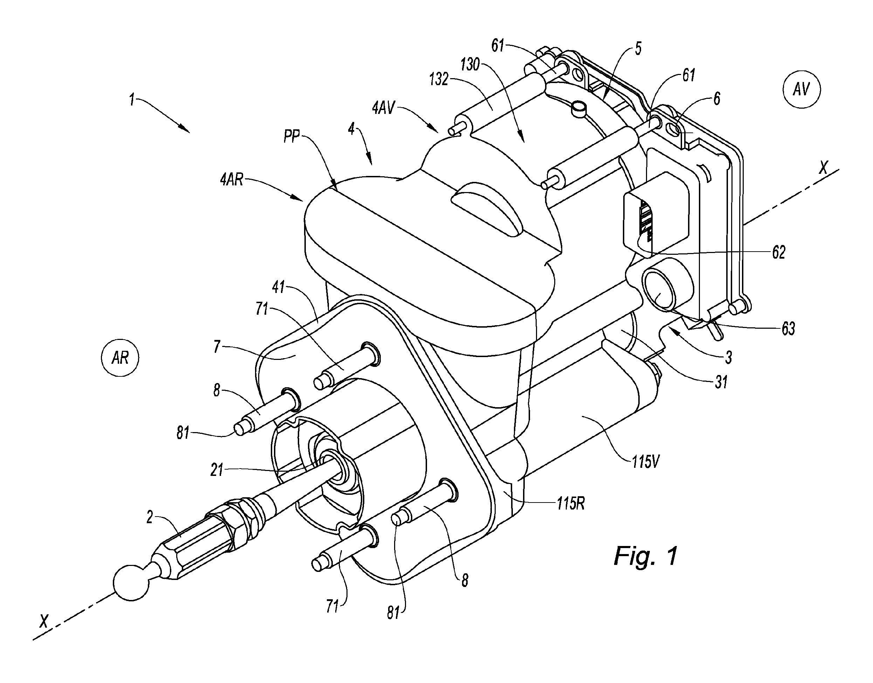

Selon la figure 1, l'invention a pour objet un servofrein électro-hydraulique de circuit de freins de véhicule. Le servofrein 1 commandé par la pédale de frein par la tige de commande 2 est relié à un maître-cylindre tandem 3.

Selon l'orientation de la figure 1, la partie gauche tournée vers la pédale de frein (tige de commande 2), montrant les moyens de fixation du servofrein au tablier du véhicule qui est la cloison séparant l'enceinte du moteur et l'habitacle, correspond au côté arrière (AR) et l'autre côté est celui portant le maître-cylindre tandem 3 et correspond au côté avant (AV).

Le servofrein 1 se compose d'un boîtier 4 logeant le mécanisme d'actionnement du maître-cylindre tandem 3 et le moteur électrique 5 entraînant le mécanisme. Le moteur 5 est en partie porté par une platine 6 fixée au boîtier 4.

Le boîtier 4, en matière plastique, est en deux parties 4AV, 4AR assemblées suivant le plan de jonction PP. A l'arrière, la partie 4AR du boîtier a une surface d'appui 41 recevant une interface 7 en tôle, munie de broches 71 de fixation au tablier. Côté avant, le boîtier 4 est relié par sa partie 4AV à l'embase 31 du maître-cylindre 3. L'assemblage est fait par deux tirants 8 s'appuyant par une extrémité sur l'embase 31 du maître-cylindre 3 et par l'autre, sur l'interface 7 pour enserrer le boîtier 4 entre l'embase 31 du maître cylindre et l'interface 7. Ces tirants 8 se prolongent au-delà de l'interface 7 par une partie filetée 81 pour constituer des broches de fixation, complétant les deux broches 71 directement solidaires de l'interface 7.

Le servofrein 1 comporte différents éléments alignés suivant l'axe XX appelé axe de manoeuvre et en particulier la tige de commande 2 reliée à la pédale de frein et les pistons primaire et secondaire non représentés du maître-cylindre 3 ainsi que le piston d'actionneur.

A l'avant (AV), la partie 4AV du boîtier 4 reçoit la platine 6 du moteur électrique 5 fixée par les tirants 61 dans des cheminées 132 extérieures au compartiment 130 du moteur électrique 5. La platine 6 porte également le connecteur 62 pour l'alimentation du moteur électrique et le connecteur 63 pour les moyens de détection du mouvement de la tige de commande 2 pour actionner le servofrein 1. Ces moyens connus de manière générale ne seront pas détaillés.

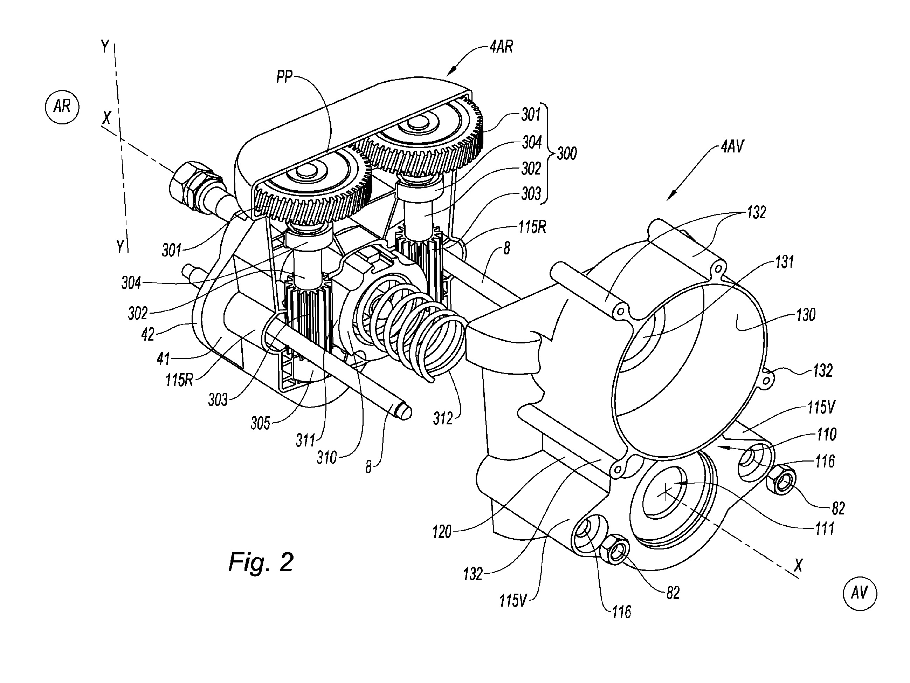

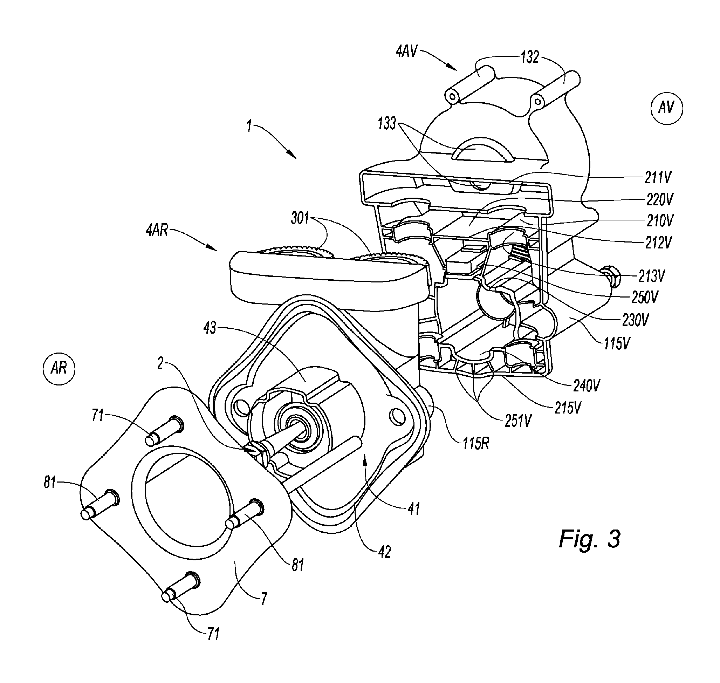

Les vues éclatées des figures 2 et 3 montrent l'organisation du boîtier 4.

La figure 2 montre la partie avant 4AV et la partie arrière 4AR en vue de devant, sans le moteur électrique et le maître-cylindre, non installés. Les deux parties 4AV, 4AR, ouvertes l'une vers l'autre, se terminent par un bord dans le plan de jonction PP perpendiculaire à l'axe de manoeuvre XX et la structure d'ensemble du servofrein est globalement symétrique par rapport à un plan YY/XX « vertical » selon la figure 2, passant par l'axe de manoeuvre XX.

La partie avant 4AV comporte, sur sa face avant, un appui 110 entourant un passage 111 pour le piston principal du maître-cylindre suivant l'axe XX. L'appui 110 est muni dans des positions symétriques par rapport à l'axe XX, de deux cheminées avant 115V débouchant dans des lamages 116 pour recevoir les formes complémentaires de la surface d'appui 31 du maître-cylindre (non représenté) et elles sont traversées par les tirants 8 serrés par les écrous 82.

Derrière la surface d'appui 111 et dans l'axe XX, la partie avant 4AV a un compartiment 120 recevant le piston d'actionneur et au-dessus de celui-ci, le compartiment cylindrique 130 de section circulaire d'axe parallèle à l'axe XX recevant le moteur électrique 5 du servofrein. Ce compartiment 130 en forme de pot a, dans son fond, une cavité 131 coaxiale pour le palier de l'axe 51 du moteur. Cet axe 51 terminé par une vis est dirigé vers la partie arrière 4AR.

Extérieurement, le pot 130 recevant le moteur comporte quatre cheminées 132 pour les tirants 61 de vissage de la platine 6 formant le couvercle et portant le moteur 5 ainsi que les moyens de connexion 62, 63.

La partie arrière 4AR en regard de la partie avant 4AV a une face tournée vers la face de la partie avant, quasi identique, en quelque sorte localement symétrique par rapport au plan de jonction PP.

La partie arrière 4AR est montrée avec les composants formant le mécanisme 300 du servofrein et comprenant un ensemble symétrique formé de deux roues à vis 301 écartées d'un intervalle permettant le passage de la vis 51 du moteur 5 qui engrène simultanément avec les deux roues 301.

Les roues à vis 301 sont identique, portées chacune par un axe 302 descendant, muni d'un pignon à denture droite 303. Chaque axe 302 est équipé d'un palier intermédiaire 304 entre la roue à vis 301 et le pignon à denture droite 303 ainsi que d'un palier inférieur 305 situé au-delà du pignon à denture droite 303.

Le piston d'actionneur 310 faisant partie du mécanisme 300 est logé coulissant dans le boîtier 4 suivant l'axe XX et porte sur ses deux côtés diamétralement opposés, une crémaillère 311 pour coopérer avec les pignons à denture droite 303.

L'ensemble cinématique ainsi constitué est symétrique par rapport au plan YY/XX de sorte que le couple du moteur 5, transmis par la vis 51, est réparti symétriquement et entraîne symétriquement le piston d'actionneur 310 par ses deux crémaillères 311.

La partie arrière 4AR comporte, du côté avant, et en partie haute, un compartiment supérieur 210R, symétrique, délimité par le dessus 211R et une cloison supérieure 212R pour loger la moitié des deux roues à vis 301. Sous la cloison supérieure 212R, une cloison intermédiaire 220R forme deux compartiments 221R recevant chacun la moitié du palier intermédiaire 304 de chaque axe 302. Il en est de même pour le palier inférieur 305 ; une cloison inférieure 240R à deux compartiments 241R reçoit dans chacun la moitié d'un palier inférieur 305.

Une cloison basse 230R et la cloison inférieure 240R délimitent aussi un compartiment 231R recevant le piston d'actionneur 310. Les deux côtés de ce compartiment 23 1 R sont ouverts pour le piston d'actionneur 310 et ses deux crémaillères 311, parallèles au plan YY/XX, comme les axes 302 et leur pignon à denture droite 303 qui engrènent chacun avec une crémaillère 311.

La partie 4AR est fermée par le dessous 215R.

Des cloisons de rigidification 250R, 251R non détaillées relient les cloisons 220R, 230R et 240R entre elles et sont aussi reliées à la surface d'appui 41 et à la cloison inférieure 241R et au dessous 215R de la partie 4AR du boîtier.

La figure 2 montre également le ressort 312 du piston d'actionneur 310, le piston plongeur 21 apparaissant à la figure 1.

Les deux côtés de la partie arrière 4AR ont une cheminée arrière 115R pour le passage des tirants 8, complétant les cheminées avant 115V.

L'appui 41 en forme de losange dépasse des cheminées 115R et constitue un bord 42 de renforcement pour rigidifier cette zone de la partie arrière 4AR et transmettre les efforts des tirants 8 à l'ensemble de la partie arrière 4AR.

La figure 3 montre par une vue éclatée, la forme des différents composants du servofrein 1 et en particulier la forme extérieure et intérieure de la partie avant 4AV du boîtier.

D'arrière en avant, cette figure montre la forme particulière de l'appui 41 de la partie arrière 4AR qui reçoit l'interface rigide 7 dans l'espace délimité par le bord 42. Elle comporte une enveloppe cylindrique 43 entourant la tige de commande 2 pour le passage à travers le tablier. Cette figure laisse apparaître les pignons 301 installés dans la partie arrière 4AR.

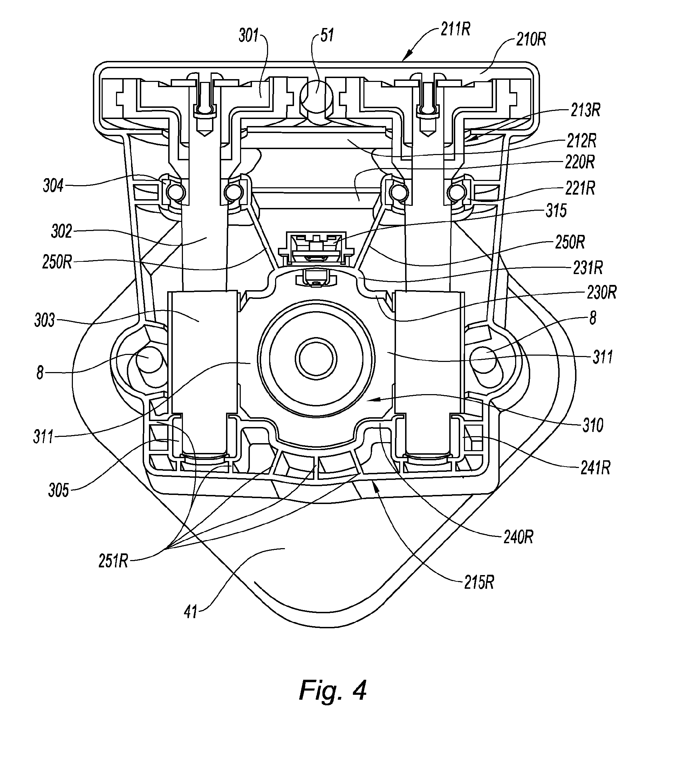

La partie avant 4AV du boîtier vide comporte des cloisons et compartiments complémentaires de ceux de la partie arrière 4AR déjà décrits à l'aide des figures 2 et 4. Ces parties portent les mêmes références numériques complétées par le suffixe V à la place de R, à savoir en partie supérieure, côté arrière, le compartiment supérieur 210V formant le demi-logement des pignons 301 entre le dessus 211V et la cloison supérieure 212V. Ce compartiment 210V est muni de deux ouvertures semi-circulaires formant les passages 213V pour entourer l'axe 302 des pignons 301. En-dessous de ce compartiment se trouve la paroi 220V avec les deux compartiments 221 V formant les demi-logements des paliers 304 des deux axes et en partie basse, la cloison basse 230V et la cloison inférieure 240V entourant en partie le compartiment 231V du piston d'actionneur 310 et ayant de chaque côté un compartiment 241V formant le demi-logement pour le palier 305 de l'extrémité inférieure de chacun des deux axes 302. Sur les côtés extérieurs, l'enveloppe de la partie avant 4AV forme les cheminées 115V complémentaires des cheminées 115R des deux tirants 8.

Sur le côté avant, la partie avant 4AV porte le compartiment 130 de forme cylindrique circulaire recevant le moteur électrique 5. Extérieurement, cette forme cylindrique est bordée par les cheminées 132 pour l'assemblage de la platine 6 portant le moteur 5.

Au centre du logement 130, une ouverture 133 permet le passage de l'axe 51 du moteur dont la vis coopère avec les deux roues à vis 301.

La vue isométrique de l'avant vers l'arrière, selon la figure 2, permet de voir le positionnement des différents composants dans le boîtier et la structure des deux parties 4AV, 4AR du boîtier 4.

La partie arrière 4AR loge les deux roues à vis 301 engrenant avec la vis non représentée, ainsi que les deux axes 302 portant les pignons droits 303 et le piston d'actionneur 310 avec les deux crémaillères 311 latérales en position diamétralement opposée par rapport à l'axe XX. Le ressort de rappel 312 du servofrein est également représenté ainsi que les deux tirants 8. La vue avant de la partie 4AV montre la forme du logement 130 recevant le moteur et la forme de l'appui 110 pour la fixation de l'embase 311 du maître-cylindre 3 ainsi que le passage 111 du piston primaire.

La figure 4 qui est une vue en coupe transversale du servofrein suivant le plan de jonction PP montre l'axe 51 engrenant avec les deux roues à vis 301 ayant chacune un axe 302 perpendiculaire à l'axe 51 de sortie du moteur et portant à son extrémité, un pignon droit 303 pour engrener chacun avec une crémaillère latérale 311 portée par le piston d'actionneur 310 du servofrein.

Cette figure met en évidence la géométrie de l'assemblage par les tirants 8 de part et d'autre des crémaillères 311 et des pignons droits 303 de sorte que les efforts les plus importants s'exercent pratiquement tous dans le plan passant par les tirants 8 et l'axe XX.

Au-dessus du compartiment 541R, apparaît le capteur 315 qui détecte le mouvement de poussée induit par la tige de commande 2 et traduisant une demande de freinage. Le moteur 5 est activé en fonction de ce signal de détection suivant la procédure de commande usuelle d'un servofrein.

L'assemblage du servofrein 1 avec le maître-cylindre 3 se fait très simplement par la mise en place des composants du mécanisme de transmission 300 dans la partie arrière AR et en parallèle, l'installation du moteur 5 dans la partie avant 4AV et ensuite la réunion des trois parties 4AR, 4AV, 3, par les tirants 8, l'ensemble étant alors prêt à être monté sur le tablier du véhicule.

L'ordre d'assemblage décrit ci-dessus peut également être modifié, en particulier le moteur peut être installé séparément dans le boîtier assemblé à l'interface et au maître-cylindre tandem.

Le servofrein selon l'invention a également l'avantage de permettre le démontage du moteur électrique du servofrein sans avoir à démonter les autres parties du servofrein et en particulier, sans avoir à ouvrir le boîtier.

### NOMENCLATURE

- 1: Servofrein
- 2: Tige de commande
- 21: Piston plongeur
- 3: Maître-cylindre tandem
- 31: Embase
- 4: Boîtier
- 41: Appui
- 42: Bord
- 43: Enveloppe cylindrique
- 4AV: Partie avant
- 4AR: Partie arrière
- 5: Moteur électrique
- 51: Axe / vis
- 6: Platine
- 61: Tirant
- 62: Connecteur
- 63: Connecteur
- 7: Interface
- 71: Broche
- 8: Tirant
- 81: Partie filetée
- 82: Ecrou
- 110: Appui pour le maître-cylindre tandem
- 111: Passage du piston principal
- 115 R,V: Cheminée
- 116: Lamage
- 120: Compartiment pour le piston d'actionneur
- 130: Compartiment cylindrique
- 131: Cavité
- 132: Cheminée
- 133: Ouverture
- 210 R, V: Compartiment supérieur
- 211 R,V: Dessus
- 212 R,V: Cloison supérieure
- 213 R,V: Découpe / passage d'axe
- 215 R,V: Dessous
- 220 R,V: Cloison intermédiaire
- 221 R,V: Compartiment intermédiaire
- 230 R,V: Cloison basse
- 231 R,V: Compartiment du piston d'actionneur
- 240 R,V: Cloison inférieure
- 241 R,V: Compartiment inférieur
- 250 R,V: Cloison de rigidification
- 251 R,V: Cloison de rigidification

- 300: Mécanisme d'actionnement du servofrein
- 301: Roue à vis
- 302: Axe
- 303: Pignon à denture droite
- 304: Palier intermédiaire
- 305: Palier inférieur

- 310: Piston d'actionneur
- 311: Crémaillère
- 312: Ressort
- 315: Capteur

- XX: Axe de manoeuvre
- YY: Direction verticale
- YY/XX: Plan de symétrie
- PP: Plan de jonction

## Revendications

1. Servofrein électro-hydraulique de circuit de frein de véhicule relié à un maître-cylindre tandem et commandé par la pédale de frein, ce servofrein à moteur électrique (1) commandant, par un mécanisme de transmission à crémaillère (311), un piston d'actionneur (310) agissant sur le piston primaire (3) du maître-cylindre,
- le poussoir, le piston d'actionneur (310) et le maître-cylindre (3) étant alignés sur un axe de manoeuvre (XX), et
- le servofrein (1) étant muni de broches (71) pour être fixé avec le maître-cylindre (3) au tablier du véhicule,
servofrein **caractérisé en ce qu'**il comporte :
A. un boîtier (4) en matière plastique en deux parties (4AR, 4AV) assemblées sur le mécanisme de transmission (300) et le piston d'actionneur (310), et logeant le moteur électrique (5),
B. une interface (7) en acier pour l'assemblage au tablier du véhicule,
C. un maître-cylindre tandem (3) avec une embase d'assemblage (31),
D. au moins deux tirants (8) traversant le boîtier (4) parallèlement à l'axe de manoeuvre (XX) de part et d'autre de celui-ci dans deux positions diamétralement opposées par rapport à l'axe (XX), les tirants (8) s'appuyant par une extrémité sur l'embase (31) du maître-cylindre (3) et par l'autre, sur l'interface (7) pour enserrer le boîtier (4) entre l'embase (31) et l'interface (7).

2. Servofrein selon la revendication 1,
**caractérisé en ce que**
les tirants (8) traversent l'interface (7) et forment des broches de fixation (81) du servofrein (1) au tablier du véhicule.

3. Servofrein selon la revendication 1,
**caractérisé en ce que**
le boîtier (4) en matière plastique est composé des deux parties (4AR, 4AV) assemblées suivant un plan d'assemblage (PP),
- une partie avant (4AV) ayant
* sur le côté avant, un compartiment cylindrique (130) ouvert, logeant le moteur électrique (5) avec une sortie dans le fond pour l'axe (51) du moteur,
* sur le côté arrière, des compartiments (210V, 221V, 241V) formant des parties de logement pour les organes du mécanisme de transmission (300) et les paliers des axes des pignons droits (303), de part et d'autre du pignon droit (303) respectif coopérant avec la crémaillère (311) du piston d'actionneur (310),
- une partie arrière (4AR) ayant :
* sur le côté avant, un appui (41) de l'interface (7),
* sur le côté arrière, des compartiments (210V, 221V, 241V) homologues et complémentaires à ceux de la partie avant (4AV), pour constituer par l'assemblage des deux parties, des logements recevant les organes du mécanisme (300),
- les compartiments étant délimités par des cloisons (211 R,V, 212 R,V, 220 R,V, 230 R,V, 240 R,V) perpendiculaires au plan d'assemblage (PP) passant par les axes géométriques des axes du mécanisme de transmission, le plan d'assemblage (PP) passant par les axes des pignons droits (303).

4. Servofrein selon la revendication 3,
**caractérisé en ce que**
le compartiment cylindrique (130) est bordé par des cheminées d'assemblage (132) parallèle à l'axe (XX), pour les tirants (61) de fixation de la platine (6) portant le moteur électrique.

5. Servofrein selon la revendication 3,
**caractérisé en ce que**
le fond du compartiment cylindrique (130) comporte une cavité (131) pour le palier de sortie de l'axe (51) du moteur électrique (5).

6. Servofrein selon la revendication 3,
**caractérisé en ce que**
la partie arrière (4AR) comporte, côté arrière, un passage (111) pour le guidage du piston d'actionneur (310).

7. Servofrein selon la revendication 1,
**caractérisé en ce que**
le boîtier (4, 4AV, 4AR) comporte des cheminées longitudinales (115 R,V) pour le passage des tirants (8).

8. Servofrein selon la revendication 3,
**caractérisé en ce que**
le moteur électrique (5) est porté par une platine (6) munie d'un palier pour l'axe du moteur fermant le compartiment (130) en étant fixée aux cheminées (132) par des tirants (61).

9. Servofrein selon les revendications 1 et 3,
**caractérisé en ce que**
les parties arrière et avant (4AR, 4AV) comportent sur leur face tournée l'une vers l'autre, des cloisons se rejoignant en appui, chant contre chant :
- un dessus (211 R,V) et un dessous (215 R,V),
- une cloison supérieure (212 R,V) délimitant le compartiment supérieur (210 R,V) avec le dessus (211 R,V),
- une cloison intermédiaire (220 R,V) sous la cloison supérieure, délimitant deux compartiments intermédiaires (221 R,V),
- une cloison basse (230 R,V) sous la cloison intermédiaire et une cloison inférieure (240 R,V) au-dessus du dessous pour délimiter le compartiment du piston d'actionneur (310),
- la cloison inférieure (240 R,V) formant deux compartiments inférieurs (241 R,V).

10. Servofrein selon la revendication 1,
**caractérisé en ce que**
le mécanisme de transmission (300), symétrique par rapport à un plan (XX, YY) (passant par l'axe XX) comprend :
- une vis à l'extrémité de l'axe (51) du moteur (5), dans le plan de symétrie (XX, YY),
- deux roues à vis (311) identiques dans des positions symétriques, portant chacune un axe (302),
- un pignon droit (303) solidaire de l'un des axes (302),
- un palier intermédiaire (304) entre la roue à vis (301) et le pignon droit (303) sur chaque axe (302),
- un palier inférieur (305) au-delà du pignon droit (303) sur l'axe (302),
- les roues à vis (301) étant logées dans le compartiment supérieur (210 R,V) de part et d'autre de la vis (51) en engrenant avec celle-ci,
- les paliers (304, 305) étant logés respectivement dans le compartiment intermédiaire (221 R,V) et le compartiment inférieur (241 R,V),
- les pignons droits (303) étant logés entre la cloison basse (230 R,V) et la cloison inférieure (240 R,V) en regard respectivement d'une crémaillère (311) du piston d'actionneur (310).
